# FASCICULE DE BREVET EUROPEEN

(11) **EP 3 793 902 B1**
(45) Date de publication et mention de la délivrance du brevet: **11.05.2022**
(21) Numéro de dépôt: 19745711.2
(22) Date de dépôt: 25.06.2019
(51) Int. Cl.: B64D 27/26, F02C 7/25, B64D 45/00, F16J 15/06, F16J 15/02, F02C 7/28

(54) **DISPOSITIF DE RESISTANCE AU FEU AMELIORE DESTINE A ETRE INTERPOSE ENTRE UNE EXTREMITE DE MAT D'ACCROCHAGE DE TURBOMACHINE D'AERONEF, ET UN CAPOTAGE DE LA TURBOMACHINE DELIMITANT UN COMPARTIMENT INTER-VEINE**
VERBESSERTE BRANDSCHUTZVORRICHTUNG ZUR POSITIONIERUNG ZWISCHEN EINEM ENDE EINER STREBE FÜR EINE FLUGZEUG-TURBOMASCHINE UND EINER VERKLEIDUNG DIESER TURBOMASCHINE ZUR BEGRENZUNG EINER ZWISCHENSTROMKAMMER
IMPROVED FIRE RESISTANCE DEVICE DESIGNED TO BE PLACED BETWEEN ONE END OF A MOUNTING STRUT FOR AN AIRCRAFT TURBOMACHINE AND A COWLING OF SAID TURBOMACHINE, DELIMITING AN INTER-FLOW COMPARTMENT

(30) Priorité: 29.06.2018 FR 1856041
(43) Date de publication de la demande: 24.03.2021
(73) Titulaire: SAFRAN AIRCRAFT ENGINES, 75015 Paris (FR)
(72) Inventeur: JACON, Bruno, Alexandre, Didier, 77550 Moissy-Cramayel (FR); ACHBARI, Baghdad, 77550 Moissy-Cramayel (FR); SIMONOTTI, Hervé, 77550 Moissy-Cramayel (FR)
(74) Mandataire: Brevalex
(86) Numéro de dépôt international: PCT/FR2019/051554
(87) Numéro de publication internationale: WO 2020/002822

(56) Documents cités:
- US-A1- 2015 098 810
- US-A1- 2015 175 272
- US-A1- 2018 156 051
- US-A1- 2018 156 129
- US-A1- 2018 163 631

## Description

### DOMAINE TECHNIQUE

L'invention concerne la fonction de résistance au feu entre un compartiment inter-veine d'une turbomachine d'aéronef à double flux, et une zone amont de mât d'accrochage de cette turbomachine. Elle vise en particulier à éviter qu'un feu initié dans le compartiment inter-veine puisse se propager dans la zone amont de mât d'accrochage.

L'invention s'applique à tout type de turbomachine à double flux, et en particulier à un turboréacteur.

### ETAT DE LA TECHNIQUE ANTERIEURE

Le document US2015098810 décrit une première section de bouteille et une seconde section de bouteille d'un turboréacteur à double flux, chacune contribuant à 180° d'une forme globale de baril de 360° et étant jointes en haut et en bas le long d'une ligne centrale commune. À l'endroit où les sections sont jointes au niveau de la ligne centrale, des joints coupe-feu sont prévus pour garantir que tout incendie ou toute condition de haute pression à l'intérieur du moteur est contenu dans les sections de bouteille.

Dans une turbomachine d'aéronef à double flux, il est habituellement prévu, en aval de la soufflante, un ou plusieurs bras traversant radialement la veine secondaire. Ce bras est typiquement agencé de manière à relier un compartiment de soufflante situé autour de la virole extérieure d'un carter intermédiaire, à un compartiment inter-veine. Ces deux compartiments logent de manière classique des équipements et des servitudes, tandis que le bras interposé entre eux deux permet le passage de différents éléments tels que des câbles électriques, et/ou des canalisations fluidiques.

L'extrémité radialement interne d'un tel bras est raccordée à un anneau amont, délimitant en partie le compartiment inter-veine radialement vers l'extérieur. Cet anneau forme ainsi l'extrémité amont de l'ensemble des capotages formant l'enveloppe extérieure du compartiment inter-veine. Pour assurer la jonction entre le bras et l'anneau amont, il est prévu d'intercaler entre eux deux capotages de raccord, qui se situent respectivement latéralement de part et d'autre d'une extrémité amont du mât d'accrochage.

Le mât d'accrochage, qui sert à fixer la turbomachine sur un élément de voilure de l'aéronef, peut en effet présenter une extrémité amont à proximité de la jonction entre le bras traversant la veine secondaire, et l'anneau amont du compartiment inter-veine. Se pose alors la problématique de la fonction anti-feu, puisqu'il est recherché à éviter la propagation d'une éventuelle flamme se déclarant dans le compartiment inter-veine, en particulier pour interdire à cette flamme d'atteindre la zone amont du mât d'accrochage située à proximité.

Il existe par conséquent un besoin d'aboutir à un dispositif de résistance au feu dont la conception garantit la fonction désirée, autorise sa facile intégration dans l'environnement dense et complexe de la zone concernée, et permet une fabrication aisée.

### RESUME DE L'INVENTION

Pour répondre à cette problématique, l'invention a tout d'abord pour objet un dispositif de résistance au feu destiné à être interposé entre une extrémité amont d'un mât d'accrochage d'une turbomachine d'aéronef à double flux, et un capotage de raccord équipant cette turbomachine, ledit capotage de raccord étant destiné à raccorder un anneau amont délimitant radialement vers l'extérieur une partie d'un compartiment inter-veine, à un bras traversant radialement une veine secondaire de la turbomachine. Selon l'invention, le dispositif comprend :
- une structure de contact comprenant une première lèvre de contact présentant une section en C, de préférence une section semi-circulaire, la structure de contact comprenant également, à l'une des extrémités longitudinales de la première lèvre de contact, un tronçon à boudin, de préférence à boudin circulaire, dont l'une des extrémités axiales se trouve dans la continuité de la première lèvre et dont l'autre extrémité axiale est obturée, la première lèvre et le tronçon à boudin définissant ensemble une première extrémité de contact s'étendant le long d'une première ligne courbe ;
- une portion de support ; et
- une seconde lèvre de contact portée par la portion de support via une zone de jonction qui porte le tronçon à boudin de la structure de contact, la seconde lèvre de contact présentant une seconde extrémité de contact s'étendant le long d'une seconde ligne distincte de la première ligne.

Par ailleurs, le dispositif de résistance au feu est monobloc.

L'invention se révèle ainsi avantageuse en ce qu'elle prévoit un dispositif de résistance au feu qui s'avère performant, qui s'intègre parfaitement dans son environnement, et dont le caractère monobloc rend sa fabrication particulièrement aisée et peu coûteuse, notamment au regard de l'outillage requis.

L'aspect monobloc est rendu possible par la géométrie simple du dispositif selon l'invention, notamment par l'emploi de lèvres de contact. Celles-ci ne requièrent d'ailleurs pas l'utilisation d'insert lors de la fabrication du dispositif, par opposition par exemple à la mise en œuvre de zones de contact tubulaires, dites à bourrelet ou à boudin. De plus, une lèvre se révèle habituellement facilement déformable, de sorte qu'il n'est pas nécessaire de lui faire subir une opération spécifique de précontrainte après son assemblage. La déformation requise pour garantir sa fonction de barrière au feu peut simplement résulter de l'appui d'un élément environnant, comme par exemple l'appui d'un joint de capot mobile de nacelle destiné à s'écraser dans la zone.

Il est noté que ces avantages ne sont pas remis en cause par la présence du tronçon à boudin, étant donné que ce dernier reste ouvert à l'une de ses extrémités axiales. Cette caractéristique garantit notamment la fabrication aisée de la pièce monobloc. Ce tronçon à boudin, agencé à l'une des extrémités longitudinales de la première lèvre de contact, permet localement de maitriser plus facilement l'étanchéité, grâce à sa section transversale plus étendue que celle de la première lèvre en forme de C qu'il prolonge.

En outre, la forme en C de la première lèvre de contact se révèle avantageuse en ce qu'elle présente une compatibilité avec les dispositifs de résistance au feu existants, incorporant des joints à boudins équipés à leurs extrémités longitudinales de pions de raccord. En effet, l'extrémité longitudinale de la première lèvre de contact d'un dispositif de résistance au feu selon l'invention peut ainsi parfaitement coopérer avec le pion de raccord d'un dispositif de résistance au feu complémentaire, déjà installé sur l'ensemble propulseur. Cette complémentarité de formes facilite la jonction entre les deux dispositifs, qui est assimilable à un emboîtement du pion dans la section ouverte de la première lèvre de contact.

En d'autres termes, la forme en C de la première lèvre permet de faciliter le raccordement du dispositif selon l'invention à un dispositif classique, équipant déjà l'ensemble propulseur. Par conséquent, lorsque cet ensemble propulseur comprend deux dispositifs de résistance au feu raccordés de manière à se trouver dans la continuité l'un de l'autre, le remplacement d'un seul des deux dispositifs devient possible. La maintenance de ces dispositifs de résistance au feu s'en trouve facilitée et sécurisée.

Enfin, il est indiqué qu'avec la structure de contact et la seconde lèvre de contact, le dispositif de résistance au feu selon l'invention permet de former deux barrières physiques distinctes et sensiblement contigües. L'une est prévue pour stopper l'éventuel feu dans le compartiment inter-veine afin qu'il ne se propage pas circonférentiellement vers la face latérale du mât ni radialement vers une face d'extrémité amont de ce dernier, et l'autre est prévue de sorte que cet éventuel feu ne se propage pas axialement vers l'aval, le long de cette même face latérale du mât.

L'invention prévoit de préférence au moins l'une des caractéristiques techniques optionnelles suivantes, prises isolément ou en combinaison.

De préférence, ladite seconde ligne est droite, et de préférence sensiblement orthogonale à une première surface de contact sensiblement plane dans laquelle s'inscrit la première ligne courbe. Néanmoins, d'autres formes de ligne et d'autres inclinaisons peuvent être retenues en fonction des surfaces d'appui à contacter, sans sortir du cadre de l'invention.

De préférence, le dispositif comprend également une portion de fixation portant la première lèvre de contact, ladite portion de fixation étant préférentiellement traversée par des trous de passage d'éléments de fixation.

De préférence, la portion de support porte, à l'opposé de la seconde lèvre et de sa zone de jonction, des éléments allongés de fixation. Ces éléments allongés de fixation peuvent alors facilement coopérer avec le capotage de raccord, pour un meilleur maintien sur ce dernier.

De préférence, le dispositif est formé par la superposition d'au moins une couche en matériau élastomère, de préférence en élastomère silicone, et d'au moins une couche fibreuse, de préférence en céramique, verre ou meta-aramide (poly(m-phénylèneisophtalamide)). D'autres types de couches sont néanmoins possibles, sans sortir du cadre de l'invention. Il est noté qu'une couche de tissu céramique s'avère particulièrement efficace pour la fonction de résistance au feu, tandis qu'une couche de fibres de verre permet de raidir l'empilement, et de limiter le fluage d'élastomère silicone dans le plan orthogonal à la direction de superposition des couches, en cas de sollicitation mécanique selon cette dernière direction. Enfin, une couche de fibres de meta-aramide permet également un tel raidissement.

De préférence, une ou plusieurs couches fibreuses s'étendent sur toute la longueur de la première lèvre de contact et du tronçon à boudin, de même qu'une ou plusieurs couches fibreuses s'étendent sur toute la longueur de la seconde lèvre de contact.

L'invention a également pour objet un ensemble propulseur pour aéronef comprenant une turbomachine d'aéronef à double flux, ainsi qu'un mât d'accrochage de la turbomachine destiné à sa fixation sur un élément de voilure de l'aéronef,
la turbomachine comportant un compartiment inter-veine agencé entre une veine primaire et une veine secondaire de la turbomachine, ainsi qu'un bras traversant radialement une veine secondaire et communiquant avec le compartiment inter-veine, ce dernier étant en partie délimité radialement vers l'extérieur par un anneau amont raccordé au bras à l'aide de deux capotages de raccord agencés respectivement de part et d'autre d'une extrémité amont du mât d'accrochage, selon une direction transversale de l'ensemble propulseur,
l'extrémité amont du mât d'accrochage comprenant deux faces latérales, ainsi qu'une portée périphérique suivant le contour d'une base de cette extrémité amont de mât.

Selon l'invention, l'ensemble propulseur comprend également, associé à au moins l'un des deux capotages de raccord, un dispositif de résistance au feu tel que décrit précédemment, interposé entre l'extrémité amont du mât d'accrochage et le capotage de raccord auquel est fixé le dispositif.

De préférence, la première extrémité de contact est en appui sur la portée périphérique de l'extrémité amont du mât d'accrochage, et la seconde extrémité de contact de la seconde lèvre de contact est en appui sur la face latérale correspondante de l'extrémité amont du mât d'accrochage.

De préférence, la première ligne courbe s'inscrit dans une première surface de contact sensiblement plane, et sensiblement parallèle à la direction transversale ainsi qu'à une direction longitudinale de l'ensemble, et la seconde ligne définie par la seconde lèvre de contact est une droite s'étendant sensiblement parallèlement à une direction verticale de l'ensemble.

De préférence, la seconde lèvre de contact est préférentiellement contrainte entre la face latérale de l'extrémité amont du mât d'accrochage, et un joint de capot mobile de nacelle.

Enfin, l'ensemble propulseur comprend également, associé à l'autre des deux capotages de raccord, un dispositif de résistance au feu complémentaire interposé entre l'extrémité amont du mât d'accrochage et le capotage de raccord auquel est fixé le dispositif complémentaire, ce dernier comprenant une structure de contact en forme de joint à boudin, dont une extrémité longitudinale est équipée d'un pion de raccord coopérant avec l'autre extrémité longitudinale de la première lèvre de contact appartenant au dispositif de résistance au feu. Comme évoqué précédemment, cette particularité illustre le fait que l'invention présente une forme permettant l'assemblage du dispositif sur un autre dispositif existant, de conception différente et déjà en place sur l'ensemble propulseur.

D'autres avantages et caractéristiques de l'invention apparaîtront dans la description détaillée non limitative ci-dessous.

### BREVE DESCRIPTION DES DESSINS

Cette description sera faite au regard des dessins annexés parmi lesquels ;
- la figure 1 est une vue partielle et schématique en perspective d'un ensemble propulseur selon un mode de réalisation préféré de l'invention ;
- la figure 2 représente une vue éclatée en perspective d'une partie de l'ensemble propulseur montré sur la figure 1 ;
- la figure 3 représente une vue en perspective de la partie montrée sur la figure précédente ;
- la figure 4 est une vue de côté de celle montrée sur la figure précédente, avec le dispositif de résistance au feu représenté en pointillés ;
- la figure 5 est une vue en coupe prise le long de la ligne V-V de la figure 4;
- les figures 6a et 6b sont des vues en perspective du dispositif de résistance au feu montré sur les figures précédentes, selon différents angles de vue ;
- la figure 6c est une vue en coupe prise selon le plan Pc de la figure 6b, traversant le tronçon à boudin ;
- la figure 6d est une vue de dessus d'une partie du dispositif de résistance au feu montré sur les figures 6a et 6b ;
- la figure 7 est une vue en perspective de la partie montrée sur les figures 2 à 4, schématisant la ligne d'étanchéité obtenue grâce au dispositif de résistance au feu ;
- la figure 8 représente une vue en perspective de la partie montrée sur les figures 2 à 4, montrant en particulier la seconde lèvre de contact du dispositif de résistance au feu, à l'état contraint ;
- la figure 9 est une vue en coupe prise le long de la ligne IX-IX de la figure 10 ;
- la figure 10 est une vue en coupe prise le long de la ligne X-X de la figure 9 ;
- la figure 11 représente l'association entre un dispositif de résistance au feu tel que montré sur les figures précédentes, et un dispositif complémentaire conventionnel ;
- la figure 12 est une vue arrière d'une partie de l'association de dispositifs montrée sur la figure 11 ;
- la figure 13 est une vue en coupe, similaire à la vue de la figure précédente ; et
- la figure 14 est une vue en coupe prise le long de la ligne XIV-XIV de la figure 13.

### EXPOSE DETAILLE DE MODES DE REALISATION PREFERES

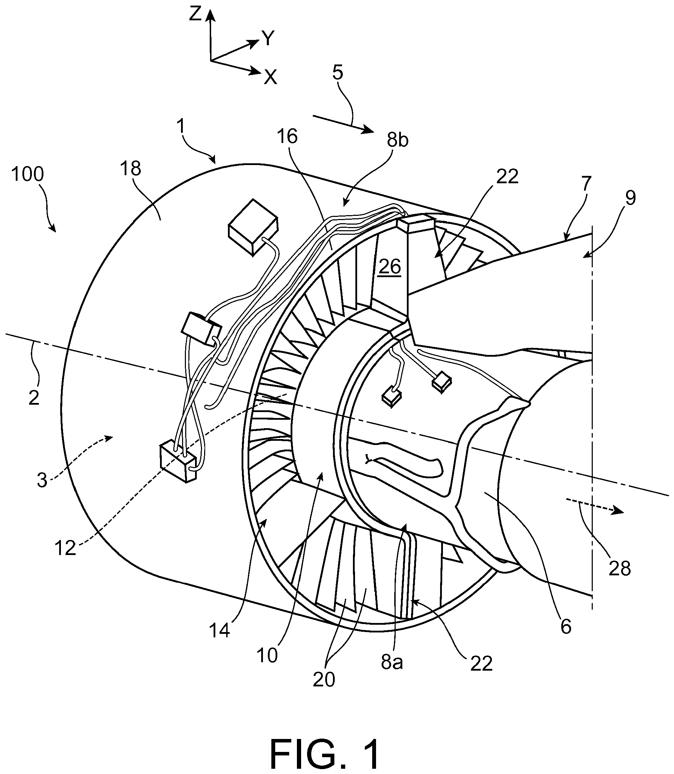

En référence tout d'abord à la figure 1, il est représenté partiellement un ensemble propulseur 100 selon un mode de réalisation préféré de l'invention. Cet ensemble 100 comporte une turbomachine 1 à double flux pour aéronef, ainsi qu'un mât d'accrochage 9 de cette turbomachine sur un élément de voilure de l'aéronef (non représenté).

L'ensemble propulseur 100 présente une direction longitudinale X, correspondant également à la direction longitudinale de la turbomachine 1 et à celle du mât 9. L'ensemble 100 présente également une direction transversale Y, ainsi qu'une direction verticale Z, correspondant à la direction de la hauteur. Les trois directions X, Y et Z sont orthogonales entre elles et forment un trièdre direct.

De préférence, le mât 9 permet de suspendre la turbomachine 1 sous une aile de l'aéronef. Ce mât comporte une partie structurale destinée à la reprise des efforts provenant de la turbomachine, cette partie étant habituellement dénommée structure primaire ou structure rigide. Elle adopte généralement la forme d'un caisson, dont seule une extrémité amont 7 est représentée sur la figure 1. Le mât est également équipé de structures secondaires (non représentées) sous forme de carénages aérodynamiques.

Dans le mode de réalisation préféré décrit et représenté, la turbomachine 1 est un turboréacteur à double flux, et à double corps. Le turboréacteur 1 présente un axe central longitudinal 2 parallèle à la direction X, et autour duquel s'étendent ses différents composants. Elle comprend, d'amont en aval selon une direction principale 5 d'écoulement des gaz à travers cette turbomachine, une soufflante 3 puis un générateur de gaz formé classiquement par des compresseurs, une chambre de combustion et des turbines. Ces éléments du générateur de gaz sont entourés par un carter central 6, également dénommé carter « core », qui délimite radialement vers l'intérieur un compartiment inter-veine 8a. Ce compartiment 8a est délimité par ailleurs radialement vers l'extérieur par un ou plusieurs capotages, dont un anneau amont 10 qui est le seul représenté sur la figure 1. L'anneau amont 10 est agencé dans la continuité aval d'un moyeu 12 d'un carter intermédiaire 14 du turboréacteur. Le carter intermédiaire 14 comporte également une virole extérieure 16 se situant dans la continuité aval d'un carter de soufflante 18. Il comporte aussi des aubes directrices de sortie 20, agencées en aval des aubes de soufflante et reliant le moyeu 12 à la virole extérieure 16.

Le carter de soufflante 18 et la virole extérieure 16 délimitent ensemble, radialement vers l'intérieur, un compartiment de soufflante 8b. Ce compartiment 8b est délimité par ailleurs radialement vers l'extérieur par un ou plusieurs capotages (non représentés), faisant partie d'une nacelle du turboréacteur. Tout comme le compartiment inter-veine 8a, ce compartiment 8b loge des équipements et des servitudes, comme cela est largement connu de l'art antérieur.

Un ou plusieurs bras 22 sont prévus pour relier les deux compartiments 8a, 8b. Ce sont par exemple deux bras 22 qui équipent le turboréacteur, respectivement agencés dans des positions horaires dites à 12h et à 6h. Ces bras 22 sont creux, et ils permettent par exemple de faire circuler des câbles électriques, et/ou des canalisations fluidiques. Plus précisément, ces bras relient une partie aval de la virole extérieure 16, à l'anneau amont 10. Pour ce faire, ils traversent une veine secondaire 26 du turboréacteur, cette veine étant en partie délimitée vers l'extérieur par la virole 16 ainsi que par des capotages (non représentés) disposés en aval de celle-ci, et en partie délimitée vers l'intérieur par l'anneau amont 10 du compartiment inter-veine 8a. La veine secondaire 26 s'ajoute à une veine primaire 28, qui transite de manière classique par le générateur de gaz.

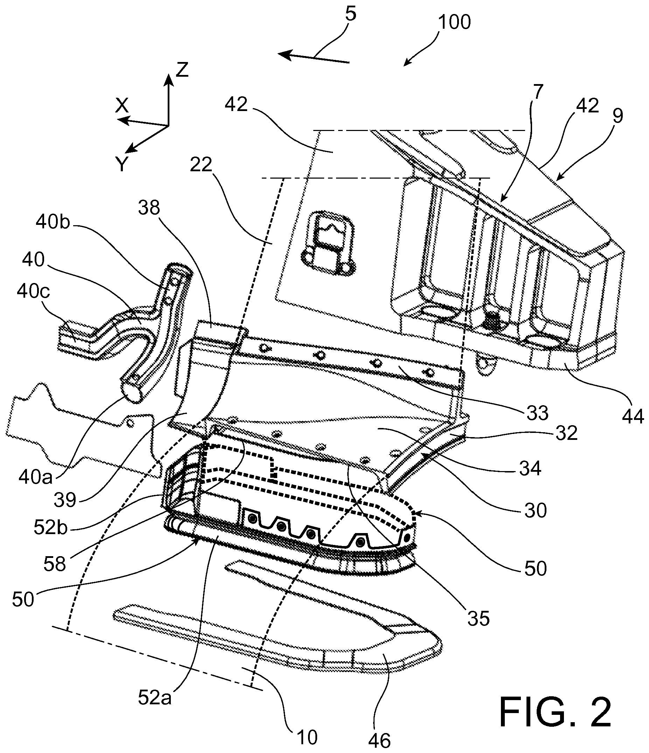

En référence à présent aux figures 2 à 5, il est représenté une partie de l'ensemble propulseur 100 impliquant l'extrémité amont 7 du mât 9, le bras 22 situé en position horaire à 12h, ainsi que l'anneau amont 10. Plus précisément, de part et d'autre de l'extrémité amont 7 du mât 9, selon la direction Y, il est prévu respectivement deux capotages de raccord 30 assurant la jonction aérodynamique entre le bras 22 et l'anneau amont 10. Ce dernier n'est ainsi pas complètement fermé sur 360°, mais il présente une ouverture angulaire centrée sur la position horaire à 12h, au niveau de laquelle les deux capotages de raccord 30 assurent la jonction avec l'extrémité radialement interne du bras 22.

Sur les figures, l'assemblage entre les différents éléments n'est représenté que pour un côté du mât, mais il est entendu qu'un assemblage identique ou similaire, de préférence symétrique, est prévu de l'autre côté de l'extrémité amont 7 du mât 9. Ainsi, de chaque côté du mât 9, le capotage de raccord 30 présente une extrémité amont 32 qui est destinée à se situer dans la continuité aval du moyeu de carter intermédiaire. Son extrémité haute 33 se raccorde à une paroi du bras 22, tandis que son extrémité circonférentielle 35 se raccorde à une extrémité circonférentielle de l'anneau amont 10. Enfin, son extrémité aval 38 forme un logement 39 du type secteur angulaire de gorge, logeant un joint de nacelle 40 qui est de préférence porté par un capot mobile de nacelle (non représenté sur les figures 2 à 5). Ce joint 40, également dénommé joint à trois branches ou joint tripode, comporte en effet un nœud à partir duquel s'étendent une première portion de joint 40a s'écrasant dans le logement 39 puis sur l'anneau amont 10, une seconde portion de joint 40b s'écrasant dans le logement 39 puis sur le bras 22, et une troisième portion de joint 40c s'écrasant sur une face latérale 42 du mât. Chaque branche du joint 40 est du type tubulaire, à boudin ou à bourrelet.

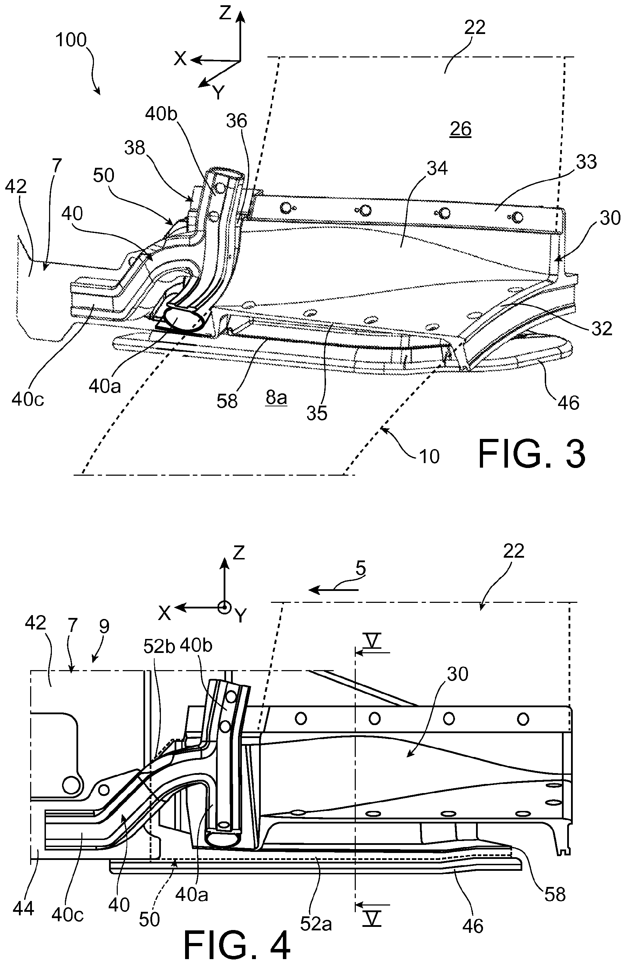

Le joint 40 adopte ainsi la position représentée sur la figure 3 après la fermeture du capot mobile de nacelle sur lequel il est implanté, capot qui présente alors une surface extérieure agencée dans la continuité aval d'une surface extérieure 34 du capotage de raccord 30.

L'extrémité amont 7 du mât 9 présente une base 44, à partir de laquelle s'étendent en particulier les deux faces latérales 42. La base 44 est solidaire d'une portée périphérique 46 en forme générale de U, suivant le contour de cette base 44. Elle est sensiblement plane, parallèle aux directions X et Y. Sa fonction réside essentiellement dans l'établissement d'une barrière anti-feu entre le compartiment inter-veine 8a, et l'extrémité amont 7 du mât. Pour satisfaire cette fonction, l'ensemble 100 comprend un dispositif de résistance au feu 50 propre à l'invention, associé à chaque capotage de raccord 30. Dans une forme alternative de réalisation de l'invention qui sera décrite ultérieurement, l'ensemble 100 comprend un dispositif de résistance au feu propre à l'invention et associé à l'un des deux capotages de raccord 30, ainsi qu'un dispositif de résistance au feu complémentaire plus conventionnel, associé à l'autre capotage de raccord 30.

Les deux capotages de raccord 30 peuvent présenter des conceptions identiques ou similaires, en étant par exemple conçus symétriquement par rapport à un plan longitudinal XZ passant par l'axe 2. Cette configuration est représentée schématiquement sur la figure 2, montrant également l'association des deux dispositifs 50 propres à l'invention qui se rejoignent au niveau de leur extrémité amont afin de définir conjointement un profil similaire à celui de la portée périphérique 46, contre laquelle ils s'écrasent.

En référence aux figures 2 à 5, il ne sera décrit que l'un des deux dispositifs 50, dont les conceptions sont identiques ou similaires, en étant par exemple conçus symétriquement par rapport au plan longitudinal XZ passant par l'axe 2.

Le dispositif de résistance au feu 50 est ainsi interposé entre l'extrémité amont 7 du mât, et son capotage de raccord associé 30 sur lequel est fixé ce même dispositif. D'une manière générale, le dispositif 50 présente une première lèvre de contact 52a ainsi qu'une seconde lèvre de contact 52b, la première lèvre 52a s'appuyant contre une surface radialement externe de la portée périphérique 46, sur une demi-portion de celle-ci. Cette première lèvre de contact 52a permet qu'un feu qui se déclare dans le compartiment inter-veine 8a ne se propage pas circonférentiellement vers la face latérale 42 du mât, ni radialement vers l'extérieur en direction d'une face d'extrémité amont de ce même mât.

La seconde lèvre de contact 52b s'appuie quant à elle sur la face latérale 42 du mât, en aval des deux portions 40a, 40b du joint de nacelle 40. Elle est conçue pour stopper l'éventuel feu dans le compartiment inter-veine 8a afin qu'il ne se propage pas axialement vers l'aval, le long de la face latérale 42 du mât.

Avec ses lèvres, le dispositif 50 offre une solution astucieuse et performante pour conférer la fonction anti-feu, malgré les mouvements relatifs susceptibles d'être observés entre le turboréacteur et le mât, durant les différentes phases de vol de l'aéronef.

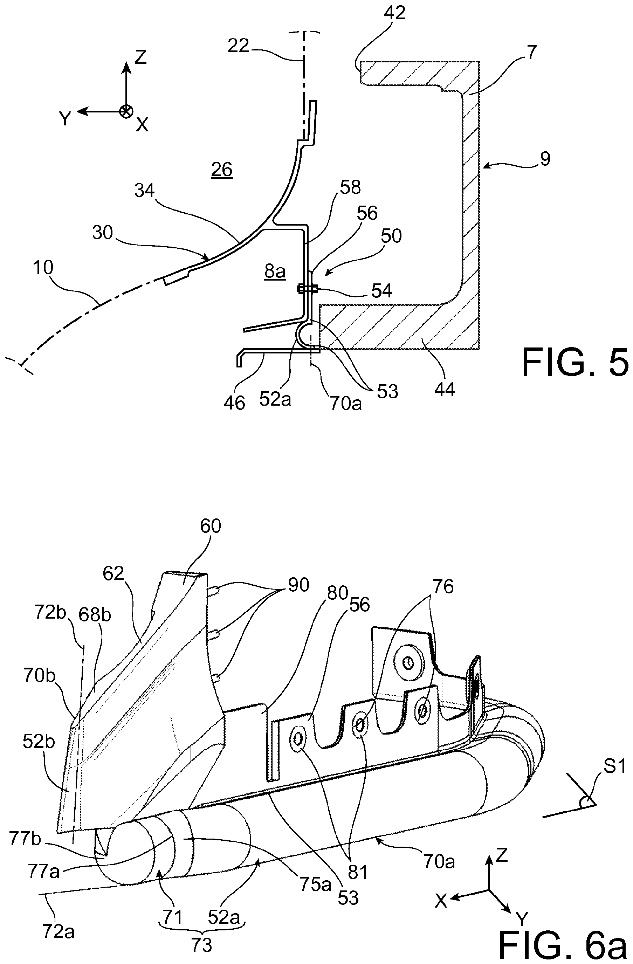

La figure 5 montre la première lèvre 52a avec un faible niveau de compression, résultant de la position relative entre le turboréacteur et le mât. Cette première lèvre 52a présente une section transversale en C, préférentiellement semi-circulaire, correspondant à sa forme nominale à l'état non-contraint. Ainsi, lorsque la première lèvre 52a est comprimée, elle présente une forme tendant à s'aplatir / s'ovaliser qui conduit ses deux extrémités circonférentielles 53 à se rapprocher l'une de l'autre, selon la direction de compression correspondant à la direction Z.

L'une des deux extrémités circonférentielles 53 est en appui contre la portée périphérique 46, en étant sensiblement tangente à cette portée. L'autre extrémité 53 est portée par une portion de fixation 56, traversée par des éléments de fixation 54 du type boulons ou rivets. Ces éléments 54 traversent en effet la portion de fixation 56 du dispositif 50, ainsi qu'un premier support 58 du capotage de raccord 30, situé radialement vers l'intérieur entre ce dernier et la portée périphérique 46. Le premier support 58 présente une forme générale de U ouvert latéralement vers l'extérieur, tandis que la première lèvre 52a semi-circulaire est ouverte latéralement vers l'intérieur.

Ainsi, la portion de fixation 56 s'étend selon la direction Z vers le bas parallèlement à la base du U 58, jusqu'à se raccorder à l'une des extrémités circonférentielles 53 de la première lèvre 52a semi-circulaire. La zone de raccordement souple entre la portion de fixation 56 et l'extrémité 53 se situe à proximité de la zone de raccordement entre la base du U et sa branche inférieure. Par conséquent, la partie supérieure de la première lèvre 52a est préférentiellement en appui contre la branche inférieure du premier support 58 en forme de U.

En outre, en coupe transversale telle que celle de la figure 5, les deux extrémités circonférentielles 53 de la première lèvre 52a s'inscrivent préférentiellement sur une ligne fictive verticale le long de laquelle s'étend la portion de fixation 56. Cette géométrie est en particulier observée à l'état non-contraint de la première lèvre 52a. Néanmoins, il est précisé que la conception du dispositif de résistance au feu 50 permet de conserver le contact entre la première lèvre 52a et la portée périphérique 46, quels que soient les mouvements relatifs observés entre le turboréacteur et le mât, et ce dans chacune des trois directions X, Y et Z.

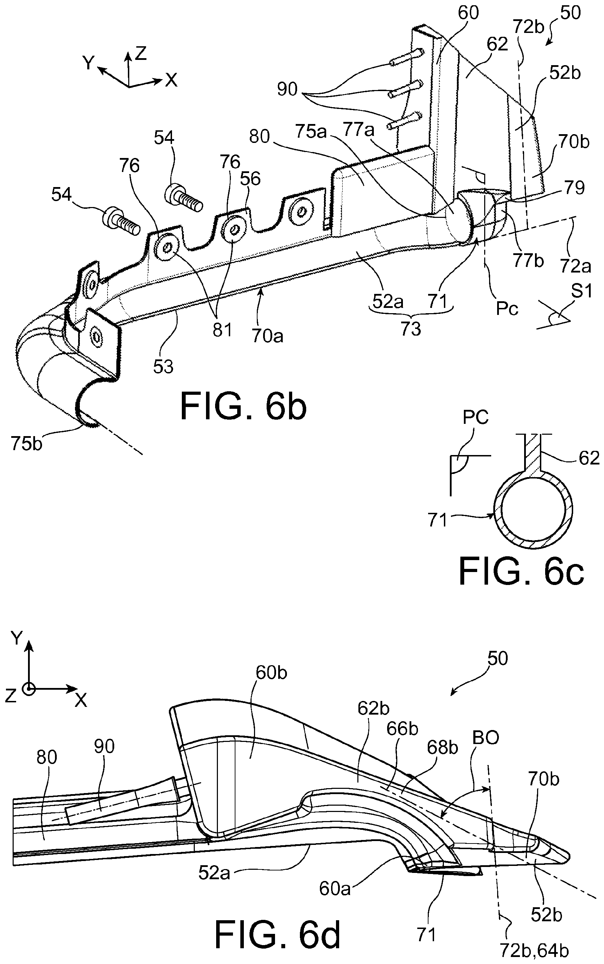

L'extrémité circonférentielle 53 coopérant avec la portée 46 définit la majeure partie d'une première extrémité de contact 70a du dispositif 50 avec le mât. Cette première extrémité de contact 70a est complétée par une faible partie provenant d'un tronçon à boudin 71, c'est-à-dire un tronçon tubulaire, référencé sur les figures 6a à 6d et présentant préférentiellement une section transversale circulaire, dont le creux reste préférentiellement vide. Ce tronçon 71 forme avec la première lèvre 52a une structure de contact 73 destinée à s'appuyer sur la portée périphérique 46 du mât.

Le tronçon 71 est agencé dans la continuité de l'extrémité longitudinale aval 75a de la première lèvre 52a. Plus précisément, le tronçon à boudin circulaire 71 présente une extrémité axiale amont 77a qui est ouverte, et qui se trouve dans la continuité de l'extrémité longitudinale aval 75a de la lèvre 52a. Par conséquent, au niveau de la transition entre la lèvre 52a et le tronçon 71 opérée par les extrémités 75a, 77a, la structure de contact 73 passe d'une section circulaire à une section semi-circulaire, éventuellement de manière progressive, mais préférentiellement de manière abrupte. De manière plus générale, quelle que soit la forme de la lèvre 52a et celle du tronçon 71, la structure de contact 73 passe d'une section fermée (au sein du tronçon 71), à la moitié de cette section fermée (au sein de la lèvre 52a en forme de C).

Les diamètres extérieurs et intérieurs des deux extrémités 75a, 77a sont respectivement sensiblement identiques. Ces diamètres sont d'ailleurs sensiblement constants tout le long de la structure de contact 73, même si des variations mineures peuvent être observées, par exemple dans une plage de plus ou moins 15%.

L'extrémité axiale aval 77b du tronçon 71 est obturée, par exemple sous forme de dôme. Grâce à cette obturation ainsi qu'à la forme tubulaire du tronçon 71, cette partie aval de la structure de contact 73 assure une étanchéité renforcée et plus aisée à obtenir, en raison d'une plus grande étendue transversale que celle de la première lèvre en C 52a prolongée par ce tronçon.

Comme évoqué précédemment, le tronçon à boudin circulaire 71 ne constitue qu'une faible partie de la structure de contact 73, à savoir seulement son extrémité aval. De préférence, sa longueur ne représente pas plus de 20% de la longueur totale de la structure de contact 73, et encore plus préférentiellement, représente un pourcentage inférieur à 15%.

Il est noté que comme pour la lèvre 52a, le caractère préférentiellement circulaire du tronçon 71 correspond à sa forme nominale, observée à l'état non-contraint. Ainsi, une fois agencé sur l'ensemble propulseur, ce tronçon 71 est lui aussi sujet à un aplatissement / une ovalisation résultant des mouvements relatifs entre le turboréacteur et le mât, et ce dans chacune des trois directions X, Y et Z. D'autres types de déformation peuvent néanmoins être observés sur ce tronçon essentiellement sollicité en compression, sans sortir du cadre de l'invention.

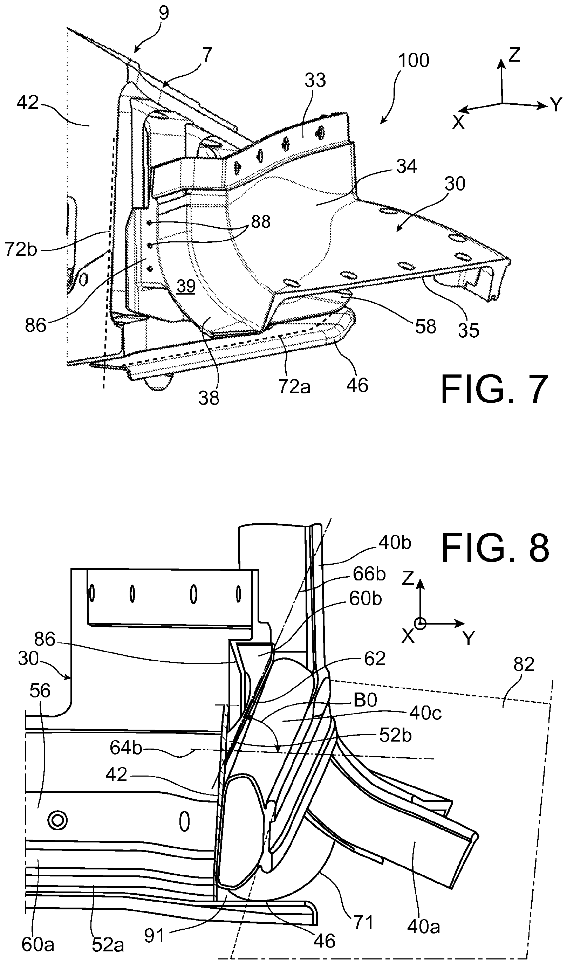

Ensemble, la première lèvre de contact 52a et l'extrémité inférieure du tronçon 71 permettent d'établir une première ligne d'étanchéité sur la portée périphérique 46. Comme cela est représenté sur la figure 7, il s'agit d'une première ligne courbe 72a, suivant le profil de la demi-portion de portée 46 associée à la structure de contact. La première extrémité de contact 70a de cette structure de contact 70 (non représentée sur la figure 7 mais visible sur les figures 6a et 6b), s'étend le long de cette première ligne courbe 72a, en forme générale de L.

L'une des particularités de l'invention réside dans le fait que le dispositif 50 intègre la seconde lèvre précitée, dont la fonction est d'établir une seconde ligne d'étanchéité 72b sur la face latérale 42 du mât 9. Cette seconde ligne est préférentiellement droite, sensiblement parallèle à la direction Z. De préférence, les deux lignes 72a, 72b montrées sur la figure 7 se rejoignent au niveau d'une extrémité aval radialement interne du dispositif 50. Si la structure de contact et la seconde lèvre peuvent être directement contigües au niveau du tronçon à boudin, elles peuvent alternativement être reliées par un raccord de matière 79 visible sur la figure 6b, reliant l'extrémité axiale aval obturée 77b du tronçon 71, à l'extrémité radialement intérieure de la seconde lèvre de contact 52b.

De nouveau en référence aux figures 6a à 6d, le dispositif 50 va être décrit de manière plus détaillée. Sur ces figures, il est tout d'abord représenté la première ligne courbe 72a, le long de laquelle se succèdent la première lèvre 52a et le tronçon à boudin circulaire 71. La ligne 72a s'inscrit dans une première surface de contact S1 sensiblement plane, qui correspond à la surface radialement externe de la portée périphérique 46. Cette surface S1 peut être strictement plane, ou présenter un ou plusieurs niveaux de très faible hauteur, par exemple ne dépassant pas quelques millimètres. La surface S1 correspond ainsi préférentiellement à un plan XY de l'ensemble propulseur 100. En outre, la première ligne courbe 72a qui s'inscrit dans ce plan XY présente bien une forme générale de L, dont l'angle entre la base du L et la branche du L peut être arrondi, et dont l'extrémité libre de la branche peut également être arrondie.

La portion de fixation 56 s'étend vers le haut selon la direction Z à partir de la lèvre 52a, sous la forme d'une lamelle percée de trous de passage 76 destinés à être traversés par les boulons 54 précités. Les trous de passage 76 peuvent être renforcés par des inserts 81 rapportés ultérieurement sur le dispositif 50.

Au niveau de l'extrémité longitudinale aval 75a de la première lèvre 52a, le dispositif 50 comporte une portion de support 60 qui s'étend également vers le haut sensiblement selon la direction Z, à partir de l'extrémité circonférentielle supérieure 53 de cette lèvre. Plus précisément, cette portion de support 60 présente une épaisseur supérieure, et elle se trouve adjacente à une nervure 80 prévue pour renforcer la tenue mécanique du dispositif 50. La nervure 80 est interposée entre la portion de fixation 56, et la portion de support 60 en forme de bloc. Elle s'étend également vers le haut sensiblement selon la direction Z, parallèlement à la portion de fixation 56 de laquelle elle peut être écartée, selon la direction de la première ligne courbe 72a. La nervure 80 présente une épaisseur intermédiaire entre celle de la portion de fixation 56, et celle de la portion de support 60. Il en est de même pour sa hauteur selon la direction Z.

La portion de support 60 a pour fonction de porter la seconde lèvre 52b, via une zone de jonction 62 interposée entre elles. La zone de jonction 62 présente une épaisseur réduite, et sert d'articulation à la seconde lèvre 52b qui reste préférentiellement droite et pas ou peu déformée en flexion, quel que soit le niveau de compression subi.

La zone de jonction 62 s'étend à partir de la portion de support 60 sensiblement selon la direction X, vers l'aval. A son extrémité radialement intérieure, la zone de jonction 62 porte la partie supérieure du tronçon à boudin 71, qui se situe en amont de la lèvre 52b portée par l'extrémité aval de cette même zone de jonction 62.

La seconde extrémité de contact 70b de la seconde lèvre 52b s'étend selon la seconde ligne 72b préférentiellement droite, et de préférence sensiblement orthogonale à la première surface de contact S1. Ainsi, la seconde ligne droite 72b s'étend de préférence sensiblement selon la direction Z, afin que la lèvre 52b contacte la face latérale associée du mât.

L'extrémité radiale externe de l'ensemble formé par les éléments 60, 62 et 52b est biseautée, comme cela s'aperçoit le mieux sur la figure 6b.

De plus, la seconde lèvre de contact 52b présente une épaisseur grandissante en allant de sa base 68b référencée sur la figure 6a, vers la seconde extrémité de contact 70b. Par conséquent, cette dernière peut présenter un caractère surfacique, par exemple sous forme de bande verticale. A l'état non-contraint représenté sur cette figure 6d, un angle d'inclinaison B0 peut être observé entre une normale 64b à la face latérale de mât (non représentée), et une seconde direction générale de lèvre 66b définie entre la base 68b, et la seconde extrémité de contact 70b de la lèvre 52b.

A l'état assemblé du dispositif 50, sa seconde lèvre de contact 52b est sollicitée selon la direction Y par la troisième portion 40c du joint de nacelle. En référence à la figure 8, lorsque le capot de nacelle 82 (représenté uniquement schématique) est fermé, la troisième branche 40c du joint 40 solidaire de ce capot vient appuyer sur la seconde lèvre 52b. Celle-ci est alors contrainte entre la face latérale 42 du mât et la troisième portion 40c du joint 40, impliquant un pivotement de la lèvre 52b selon sa zone de jonction 62. Du fait de ce pivotement, l'angle B0 augmente par rapport à celui observé à l'état non-contraint de la figure 6d. La valeur de cet angle B0 dépend du niveau de compression du dispositif de résistance au feu 50, qui lui-même dépend de l'amplitude des mouvements relatifs entre le turboréacteur et le mât. La figure 8 montre également que la troisième portion 40c du joint 40 est contrainte selon la direction Y, impliquant que sa partie tubulaire d'étanchéité est déformée entre le capot de nacelle 82 et la lèvre 52b. Ainsi, la partie tubulaire qui présente une section de forme sensiblement circulaire à l'état non-contraint, s'aplatit sous la contrainte, en adoptant une forme par exemple elliptique, ovale ou similaire.

Cette figure 8 montre également que la présence du tronçon à boudin 71 limite fortement la section de fuite 91 entre la face latérale 42 du mât et ce même tronçon, même à des niveaux de déformation importants conduisant à des valeurs élevées pour l'angle B0. Le fait de prévoir une telle extrémité aval, en forme de boudin fermé vers l'aval et ouvert vers l'amont, participe à la facile obtention d'une étanchéité satisfaisante et maitrisée avec la face latérale 42 du mât. La section de fuite 91 reste ainsi raisonnable, même lors d'un pivotement important de la seconde lèvre 52b.

Toujours en référence à la figure 8, il est montré que la portion de support 60 du dispositif 50 est reçue dans un second support 86, prévu sur le capotage de raccord 30, au niveau de son extrémité aval 38 formant le logement de joint 39 visible sur la figure 2. Le second support 86, qui est le mieux visible sur la figure 7, présente des trous 88 destinés à recevoir les éléments allongés de fixation 90 portés par la portion de support 60, du côté apposé à celui où se trouve la lèvre 52b et sa zone de jonction 62. Ces éléments allongés 90, sont réalisés d'une seule pièce avec le dispositif 50, ou rapportés sur ce dernier. Ils sont par exemple formés par des tiges dont l'extrémité est destinée à être écrasée sur la surface opposée du second support 86 qu'elles traversent.

Une autre particularité de l'invention réside dans la fabrication monobloc du dispositif de résistance au feu 50. En d'autres termes, tous les éléments précités du dispositif 50 sont réalisés d'une seule pièce, de préférence par moulage par compression. Cette fabrication monobloc n'est d'ailleurs pas remise en cause par la présence du tronçon à boudin, puisque celui-ci reste ouvert à l'une de ses extrémités axiale, et ne s'étend préférentiellement que sur une très faible longueur.

Sont éventuellement intégrés à cette pièce d'un seul tenant les éléments allongés de fixation 90, tandis que les inserts 81 sont considérés comme des éléments rapportés extérieurs au dispositif, car faisant partie des ses moyens de fixation sur le capotage de raccord 30.

Pour la fabrication du dispositif 50, il peut s'agir d'un simple bloc élastomère, mais ce dernier est préférentiellement combiné à une ou plusieurs couches de fonctionnalités diverses.

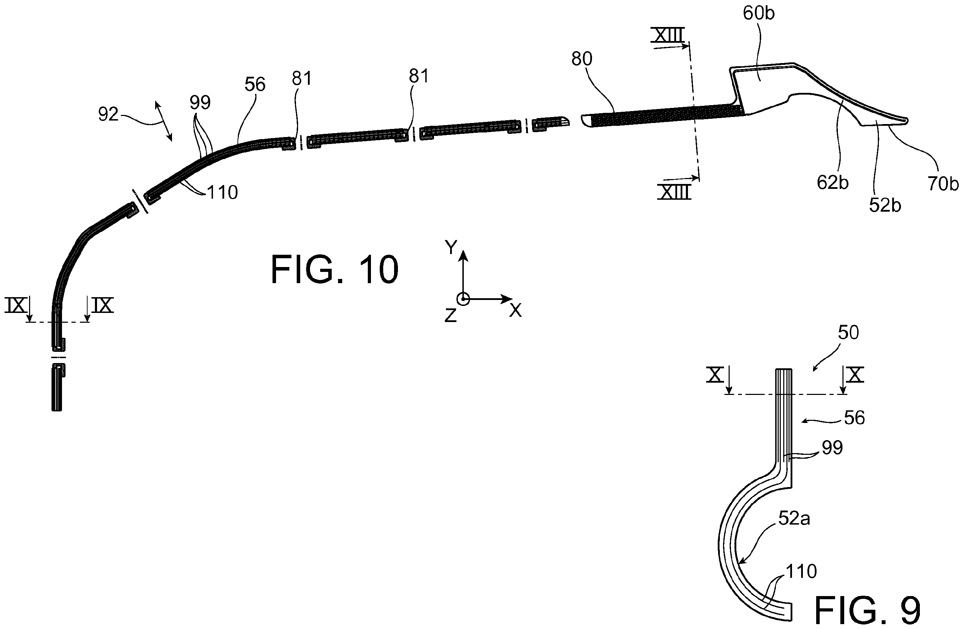

Dans l'exemple représenté sur les figures 9 et 10, le dispositif 50 est formé par la superposition, dans la direction de l'épaisseur 92 de ce dernier, de couches en matériau élastomère 99 et de préférence en matériau élastomère silicone, et de couches fonctionnelles fibreuses 110. Parmi ces dernières, il peut s'agir de couches de toile de verre, qui renforcent la rigidité du dispositif. Ensuite, il peut être prévu des couches spécifiques de résistance au feu, par exemple réalisées en fibre céramique. De préférence, celles-ci sont agencées dans les zones du dispositif les plus exposées à la flamme. Le matériau élastomère silicone des couches 99 se dégradant et se transformant en silice en cas de chaleur importante, les toiles utilisées 110 permettent, grâce à leur maillage, de retenir ces particules dégradées.

L'alternance de couches peut en outre être complétée par des couches fibreuses de meta-aramide 110, toujours pour renforcer la rigidité de l'ensemble. L'une de ces couches peut même être revêtue sur la surface extérieure des lèvres, afin de limiter leur usure et leur endommagement par les parties en contact.

Les couches 99 et 110 sont préférentiellement parallèles entre elles, en suivant le profil du dispositif 50. Au moins une ou plusieurs d'entre elles peuvent s'étendre sur toute la hauteur du dispositif 50, et d'une extrémité à l'autre de ce dernier dans la direction de la première ligne courbe précitée 72a.

Selon la direction X, le dispositif 50 peut présenter une longueur comprise entre 30 et 50 cm, tandis que selon la direction Y, la largeur de ce dispositif est de l'ordre de 10 à 20 cm. Enfin, selon la direction Z, la hauteur maximale du dispositif 50 peut être de l'ordre de 15 à 20 cm. Chaque lèvre 52a, 52b ne s'étend que sur quelques centimètres.

Pour ce qui concerne la résistance au feu procurée par le dispositif 50, en plus de se conformer aux exigences normatives ISO 2685-1998 et AC 20-135, les conditions les plus pénalisantes sont considérées, à savoir qu'il est recherché une tenue au feu en vol et une tenue au feu au sol. Cela implique notamment de concevoir une solution assurant la fonction anti-feu dans les conditions suivantes :
- température de flamme : 1100 ± 80°C ;
- vibration : ± 0,4 mm sous une fréquence de 50 Hz ;
- pression : 0,4 bar pendant les 5 premières minutes du test feu ;
- durée du test : 15 min, décomposée en 2 phases :
   5 min : Surpression appliquée ; et
   10 min : Pression atmosphérique ;
- auto-extinction dans un temps limité.

Dans la réalisation décrite ci-dessus, ce sont deux dispositifs 50 propres à l'invention qui sont associés à la portée circonférentielle 46. Une jonction entre les deux se révèle particulièrement aisée au niveau des extrémités longitudinales amont 75b de leurs premières lèvres 52a respectives. En effet, ces deux extrémités 75b en forme de C (dont l'une est visible sur la figure 6b) peuvent aisément se chevaucher, et offrir ainsi une continuité pour la barrière de résistance au feu au niveau de la zone de jonction entre les deux dispositifs 50.

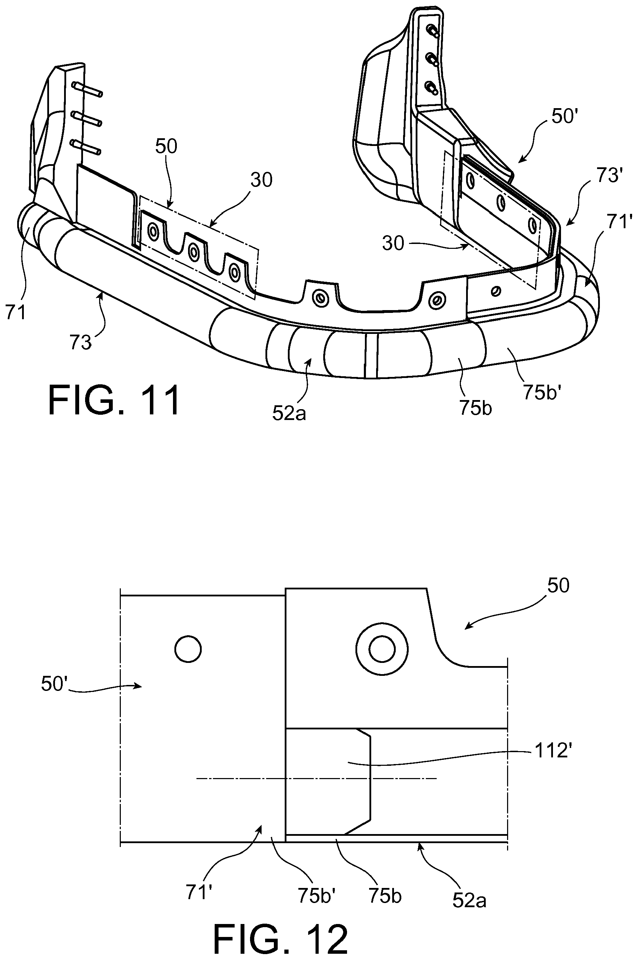

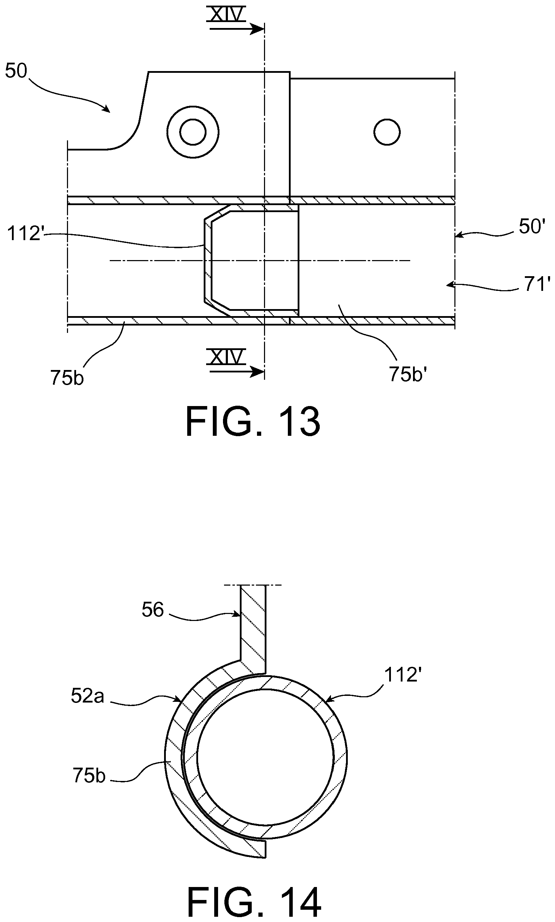

Mais l'invention s'avère également propice à une implantation sur un ensemble propulseur existant, pour remplacer seulement l'un des deux dispositifs conventionnels déjà en place sur cet ensemble. Cette fonctionnalité est représentée sur les figures 11 à 14, montrant l'association entre un dispositif 50 selon l'invention, et un dispositif de résistance au feu complémentaire 50' de conception conventionnelle. Les deux dispositifs sont respectivement destinés à être fixés sur les deux capotages de raccord 30 de l'ensemble propulseur.

Le dispositif de résistance au feu complémentaire 50' présente une conception classique, à plusieurs éléments rapportés les uns sur les autres. Il comporte globalement un joint à boudin 71' s'étendant sur sensiblement toute la longueur du dispositif 50', ce joint étant destiné à être plaqué contre la portée périphérique du mât, à la manière de la structure de contact 73 du dispositif 50. A l'état non-contraint tel que représenté sur les figures 11 à 14, le joint à boudin 71' présente une section de forme circulaire.

Ce joint à boudin 71' constitue ainsi la structure de contact 73' du dispositif complémentaire 50', et présente une extrémité longitudinale amont 75b' équipée d'un pion de raccord 112'. Ce pion 112' est creux, également de section circulaire de diamètre plus faible que celui du boudin, et éventuellement chanfreiné au niveau de sa partie terminale obturée. Pour ce qui concerne le dispositif 50, l'extrémité longitudinale amont 75b de sa première lèvre de contact 52a, de section en forme de C, se révèle parfaitement adaptée pour coopérer ce pion de raccord 112'. En effet, le diamètre intérieur du C peut être sensiblement égal au diamètre extérieur du pion de raccord 112', permettant à ce dernier d'être logé à l'intérieur de l'extrémité longitudinale amont 75b en forme de C. Ce recouvrement, visible sur les figures 12 à 14 et assimilable à un emboitement, permet d'assurer la continuité de la barrière de résistance au feu au niveau de la jonction entre le nouveau dispositif 50, et le dispositif complémentaire 50' déjà installé sur l'ensemble propulseur. Le remplacement d'un seul des deux dispositifs existants est ainsi facilité par la conception de l'invention proposée.

Bien entendu, diverses modifications peuvent être apportées par l'homme du métier à l'invention qui vient d'être décrite, uniquement à titre d'exemples non limitatifs et dont la portée est définie par les revendications annexées.

## Revendications

1. Dispositif de résistance au feu (50) destiné à être interposé entre une extrémité amont (7) d'un mât d'accrochage (9) d'une turbomachine d'aéronef à double flux (1), et un capotage de raccord (30) équipant cette turbomachine, ledit capotage de raccord étant destiné à raccorder un anneau amont (10) délimitant radialement vers l'extérieur une partie d'un compartiment inter-veine (8a), à un bras (22) traversant radialement une veine secondaire (26) de la turbomachine, **caractérisé en ce que** le dispositif comprend :
- une structure de contact (73) comprenant une première lèvre de contact (52a) présentant une section en C, la structure de contact comprenant également, à l'une des extrémités longitudinales (75a) de la première lèvre de contact (52a), un tronçon à boudin (71) dont l'une des extrémités axiales (77a) est ouverte et se trouve dans la continuité de la première lèvre (52a), et dont l'autre extrémité axiale (77b) est obturée, la première lèvre et le tronçon à boudin définissant ensemble une première extrémité de contact (70a) s'étendant le long d'une première ligne courbe (72a) ;
- une portion de support (60) ; et
- une seconde lèvre de contact (52b) portée par la portion de support (60) via une zone de jonction (62) qui porte le tronçon à boudin (71) de la structure de contact (73), la seconde lèvre de contact (52b) présentant une seconde extrémité de contact (70b) s'étendant le long d'une seconde ligne (72b) distincte de la première ligne (72a),
et **en ce que** le dispositif de résistance au feu (50) est monobloc.

2. Dispositif selon la revendication 1, **caractérisé en ce que** ladite seconde ligne (72b) est droite, et de préférence sensiblement orthogonale à une première surface de contact (S1) sensiblement plane dans laquelle s'inscrit la première ligne courbe (72a).

3. Dispositif selon l'une quelconque des revendications précédentes, **caractérisé en ce qu'**il comprend également une portion de fixation (56) portant la première lèvre de contact (52a), ladite portion de fixation étant préférentiellement traversée par des trous de passage (76) d'éléments de fixation (54).

4. Dispositif selon l'une quelconque des revendications précédentes, **caractérisé en ce que** la portion de support (60) porte, à l'opposé de la seconde lèvre (52b) et de sa zone de jonction (62), des éléments allongés de fixation (90).

5. Dispositif selon l'une quelconque des revendications précédentes, **caractérisé en ce qu'**il est formé par la superposition d'au moins une couche en matériau élastomère (99), de préférence en matériau élastomère silicone, et d'au moins une couche fibreuse (110), de préférence en céramique, verre ou meta-aramide.

6. Ensemble propulseur (100) pour aéronef comprenant une turbomachine d'aéronef (1) à double flux, ainsi qu'un mât d'accrochage (9) de la turbomachine destiné à sa fixation sur un élément de voilure de l'aéronef,
la turbomachine (1) comportant un compartiment inter-veine (8a) agencé entre une veine primaire (28) et une veine secondaire (26) de la turbomachine, ainsi qu'un bras (22) traversant radialement une veine secondaire (26) et communiquant avec le compartiment inter-veine (8a), ce dernier étant en partie délimité radialement vers l'extérieur par un anneau amont (10) raccordé au bras à l'aide de deux capotages de raccord (30) agencés respectivement de part et d'autre d'une extrémité amont (7) du mât d'accrochage (9), selon une direction transversale (Y) de l'ensemble propulseur,
l'extrémité amont (7) du mât d'accrochage comprenant deux faces latérales (42), ainsi qu'une portée périphérique (46) suivant le contour d'une base (44) de cette extrémité amont de mât (7),
**caractérisé en ce que** l'ensemble propulseur (100) comprend également, associé à au moins l'un des deux capotages de raccord (30), un dispositif de résistance au feu (50) selon l'une quelconque des revendications précédentes, interposé entre l'extrémité amont (7) du mât d'accrochage et le capotage de raccord (30) auquel est fixé le dispositif (50).

7. Ensemble selon la revendication précédente, **caractérisé en ce que** la première extrémité de contact (70a) est en appui sur la portée périphérique (46) de l'extrémité amont (7) du mât d'accrochage, et **en ce que** la seconde extrémité de contact (70b) de la seconde lèvre de contact (52b) est en appui sur la face latérale correspondante (42) de l'extrémité amont (7) du mât d'accrochage.

8. Ensemble selon la revendication 6 ou la revendication 7, **caractérisé en ce que** la première ligne courbe (72a) s'inscrit dans une première surface de contact (S1) sensiblement plane, et sensiblement parallèle à la direction transversale (Y) ainsi qu'à une direction longitudinale (X) de l'ensemble (100), et **en ce que** la seconde ligne (72b) définie par la seconde lèvre de contact (52b) est une droite s'étendant sensiblement parallèlement à une direction verticale (Z) de l'ensemble.

9. Ensemble propulseur selon l'une quelconque des revendications 6 à 8, **caractérisé en ce que** la seconde lèvre de contact (52b) est contrainte entre la face latérale (42) de l'extrémité amont (7) du mât d'accrochage (9), et un joint (40) de capot mobile de nacelle (82).

10. Ensemble propulseur selon l'une quelconque des revendications 6 à 9, **caractérisé en ce que** l'ensemble propulseur (100) comprend également, associé à l'autre des deux capotages de raccord (30), un dispositif de résistance au feu complémentaire (50') interposé entre l'extrémité amont (7) du mât d'accrochage et le capotage de raccord (30) auquel est fixé le dispositif complémentaire (50'), ce dernier comprenant une structure de contact en forme de joint à boudin (71'), dont une extrémité longitudinale (75b') est équipée d'un pion de raccord (112') coopérant avec l'autre extrémité longitudinale (75b) de la première lèvre de contact (52a) appartenant au dispositif de résistance au feu (50).

## Patentansprüche

1. Brandschutzvorrichtung (50) zur Positionierung zwischen einem stromaufwärtigen Ende (7) einer Strebe (9) für eine Zweikreis-Flugzeugturbomaschine (1) und einer Verbindungsverkleidung, welche an der Turbomaschine vorgesehen ist, wobei die Verbindungsverkleidung zum Verbinden eines stromaufwärtigen Ringes (10), der einen Teil einer Zwischenstromkammer (8a) radial nach außen begrenzt, mit einem einen Nebenstrom (26) der Turbomaschine radial durchlaufenden Arm (22) ausgelegt ist, **dadurch gekennzeichnet, dass** die Vorrichtung Folgendes aufweist:
- eine Kontaktstruktur (73) mit einer ersten Kontaktlippe (52a), die einen C-förmigen Querschnitt hat, wobei die Kontaktstruktur außerdem an dem einen der Längsenden (75a) der ersten Kontaktlippe (52a) einen Wulstabschnitt (71) aufweist, dessen eines der axialen Enden (77a) offen ist und sich in der Fortsetzung der ersten Lippe (52a) befindet, und dessen anderes axiales Ende (77b) verschlossen ist, wobei die erste Lippe und der Wulstabschnitt zusammen ein erstes Kontaktende (70a) definieren, das sich entlang einer ersten gekrümmten Linie (72a) erstreckt;
- einen Abstützbereich (60); sowie
- eine zweite Kontaktlippe (52b), die durch den Abstützbereich (60) über einen Verbindungsbereich (62) getragen wird, welcher den Wulstabschnitt (71) der Kontaktstruktur (73) trägt, wobei die zweite Kontaktlippe (52b) ein zweites Kontaktende (70b) aufweist, welches sich entlang einer von der ersten Linie (72a) verschiedenen zweiten Linie (72b) erstreckt,
und dass die Brandschutzvorrichtung (50) aus einem Stück besteht.

2. Vorrichtung nach Anspruch 1, **dadurch gekennzeichnet, dass** die zweite Linie (72b) gerade und vorzugsweise im Wesentlichen orthogonal zu einer ersten, im Wesentlichen ebenen Kontaktfläche (S1) verläuft, in die sich die erste gekrümmte Linie (72a) einfügt.

3. Vorrichtung nach einem der vorhergehenden Ansprüche, **dadurch gekennzeichnet, dass** sie ferner einen Befestigungsabschnitt (56) aufweist, der die erste Kontaktlippe (52a) trägt, wobei der Befestigungsabschnitt vorzugsweise von Durchgangslöchern (76) von Befestigungselementen (54) durchdrungen ist.

4. Vorrichtung nach einem der vorhergehenden Ansprüche, **dadurch gekennzeichnet, dass** der Stützabschnitt (60), im Gegensatz zur zweiten Lippe (52b) und ihrem Verbindungsbereich (62), verlängerte Befestigungselemente (90) trägt.

5. Vorrichtung nach einem der vorhergehenden Ansprüche, **dadurch gekennzeichnet, dass** diese durch die Überlagerung von mindestens einer Schicht aus elastomerem Material (99), vorzugsweise aus elastomerem Silikonmaterial, und mindestens einer Faserschicht (110), vorzugsweise aus Keramik, Glas oder Meta-Aramid, gebildet wird.

6. Antriebseinheit (100) für ein Flugzeug mit einer Zweikreis-Flugzeugturbomaschine (1) sowie einer Strebe (9) der Turbomaschine zu ihrer Befestigung auf einem Tragflächenelement des Flugzeugs,
wobei die Turbomaschine (1) eine Zwischenstromkammer (8a), die zwischen einem Hauptstrom (28) und einem Nebenstrom (26) der Turbomaschine angeordnet ist, sowie einen Arm (22) aufweist, der einen Nebenstrom (26) radial durchläuft und mit der Zwischenstromkammer (8a) in Verbindung steht, wobei Letztere teilweise radial zur Außenseite hin durch einen stromaufwärtigen Ring (10) begrenzt ist, der mit dem Arm mithilfe von zwei Verbindungsverkleidungen (30) verbunden ist, welche jeweils auf beiden Seiten mit einem stromaufwärtigen Ende (7) der Strebe (9) entlang einer Querrichtung (Y) der Antriebseinheit angeordnet sind,
wobei das stromaufwärtige Ende (7) der Strebe zwei Seitenflächen (42) sowie einen Umfangsbereich (46) gemäß der Kontur einer Grundfläche (44) dieses stromaufwärtigen Endes der Strebe (7) umfasst,
**dadurch gekennzeichnet, dass** die Antriebseinheit (100) ferner, in Verbindung mit mindestens einer der zwei Verbindungsverkleidungen (30), eine Brandschutzvorrichtung (50) nach einem der vorhergehenden Ansprüche aufweist, die zwischen dem stromaufwärtigen Ende (7) der Strebe und der Verbindungsverkleidung (30) positioniert ist, an der die Vorrichtung (50) befestigt ist.

7. Einheit nach dem vorhergehenden Anspruch, **dadurch gekennzeichnet, dass** das erste Kontaktende (70a) auf dem Umfangsbereich (46) des stromaufwärtigen Endes (7) der Strebe aufliegt, und dass das zweite Kontaktende (70b) der zweiten Kontaktlippe (52b) auf der entsprechenden Seitenfläche (42) des stromaufwärtigen Endes (7) der Verkleidung aufliegt.

8. Einheit nach Anspruch 6 oder Anspruch 7, **dadurch gekennzeichnet, dass** sich die erste gekrümmte Linie (72a) in eine erste, im Wesentlichen ebene Kontaktfläche (51) einfügt, die im Wesentlichen parallel zur Querrichtung (Y) sowie zu einer Längsrichtung (X) der Einheit (100) verläuft, und dass die durch die zweite Kontaktlippe (52b) definierte zweite Linie (72b) eine Gerade ist, die sich im Wesentlichen parallel zu einer senkrechten Richtung (Z) der Einheit erstreckt.

9. Antriebseinheit nach einem der Ansprüche 6 bis 8, **dadurch gekennzeichnet, dass** die zweite Kontaktlippe (52b) zwischen der Seitenfläche (42) des stromaufwärtigen Endes (7) der Strebe (9) und einer Dichtung (40) der beweglichen Kabinenabdeckung (82) eingeklemmt ist.

10. Antriebseinheit nach einem der Ansprüche 6 bis 9, **dadurch gekennzeichnet, dass** die Antriebseinheit (100) außerdem der anderen der zwei Verbindungsverkleidungen (30) zugeordnet eine zusätzliche Brandschutzvorrichtung (50') aufweist, die zwischen dem stromaufwärtigen Ende (7) der Strebe und der Verbindungsverkleidung (30) positioniert ist, an der die zusätzliche Vorrichtung (50') befestigt ist, wobei Letztere eine Kontaktstruktur in Form einer Wulstdichtung (71') aufweist, von welcher ein Längsende (75b') mit einem Verbindungsstift (112') ausgerüstet ist, der mit dem anderen Längsende (75b) der ersten Kontaktlippe (52a) zusammenwirkt, welche zu der Brandschutzvorrichtung (50) gehört.

## Claims

1. Fire resistance device (50) designed to be placed between an upstream end (7) of a mounting strut (9) of an aircraft twin-spool turbomachine (1), and a connection cowling (30) installed on this turbomachine, said connection cowling being designed to connect an upstream ring (10) delimiting part of an inter-flow compartment (8a) radially outwards, to an arm (22) passing radially through a fan flow stream (26) of the turbomachine, **characterised in that** the device comprises:
- a contact structure (73) comprising a first contact lip (52a) with a C-shaped section, the contact structure also comprising a beaded segment (71) at one on the longitudinal ends (75a) of the first contact lip (52a), one of the axial ends (77a) of the beaded section is open and is continuous with the first lip (52a), and the other axial end (77b) is closed off, the first lip and the beaded segment together defining a first contact end (70a) extending along a first curved line (72a);
- a support portion (60); and
- a second contact lip (52b) supported by the support portion (60) through a junction zone (62) that supports the beaded segment (71) of the contact structure (73), the second contact lip (52b) having a second contact end (70b) extending along a second line (72b) distinct from the first line (72a),
and **in that** the fire resistance device (50) is a single-piece.

2. Device according to claim 1, **characterised in that** said second line (72b) is straight, and preferably substantially orthogonal to a first substantially plane contact surface (S1) in which the first curved line (72a) is inscribed.

3. Device according to any one of the preceding claims, **characterised in that** it also comprises an attachment portion (56) supporting the first contact lip (52a), said attachment portion preferably containing through holes (76) for the passage of attachment elements (54).

4. Device according to any one of the preceding claims, **characterised in that** the support portion (60) carries elongated attachment elements (90), opposite the second lip (52b) and its second junction zone (62).

5. Device according to any one of the preceding claims, **characterised in that** it is formed by the superposition of at least one layer of elastomer material (99), preferably a silicone elastomer material, and at least one fibrous layer (110), preferably made of ceramic, glass or meta-aramid.

6. Propulsion unit (100) for an aircraft comprising a twin-spool turbomachine (1) for an aircraft, and a turbomachine mounting strut (9) for use in fastening it to a wing element of the aircraft,
the turbomachine (1) comprising an inter-flow compartment (8a) formed between a core engine flow (28) and a fan flow (26) of the turbomachine, and an arm (22) passing radially through a fan flow (26), and communicating with the inter-flow compartment (8a) that is partly delimited radially outwards by an upstream ring (10) connected to the arm by means of two connection cowlings (30) arranged with one on each side of an upstream end (7) of the mounting strut (9), along a transverse direction (Y) of the propulsion assembly,
the upstream end (7) of the mounting strut comprising two lateral faces (42), and a peripheral bearing surface (46) along the contour of a base (44) of this upstream end of the mounting strut (7),
**characterised in that** the propulsion assembly (100) also comprises a fire resistance device (50) according to any one of the preceding claims, associated with at least one of the two connection cowlings (30), placed between the upstream end (7) of the mounting strut and the connection cowling (30) to which the device (50) is fixed.

7. Assembly according to the preceding claim, **characterised in that** the first contact end (70a) bears on the peripheral bearing surface (46) of the upstream end (7) of the mounting strut, and **in that** the second contact end (70b) of the second contact lip (52b) bears on the corresponding lateral face (42) of the upstream end (7) of the mounting strut.

8. Assembly according to claim 6 or claim 7, **characterised in that** the first curved line (72a) is inscribed in a first approximately plane contact surface (S1) substantially parallel to the transverse direction (Y), and to a longitudinal direction (X) of the assembly (100), and **in that** the second line (72b) defined by the second contact lip (52b) is a straight line extending approximately parallel to a vertical direction (Z) of the assembly.

9. Propulsion assembly according to any one of claims 6 to 8, **characterised in that** the second contact lip (52b) is constrained between the lateral face (42) of the upstream end (7) of the mounting strut (9), and a seal (40) of the pod mobile cover (82).

10. Propulsion assembly according to any one of claims 6 to 9, **characterised in that** the propulsion assembly (100) also comprises a complementary fire resistance device (50') associated with the other of the two connection cowlings (30), placed between the upstream end (7) of the mounting strut and the connection cowling (30) to which the complementary device (50') is fixed, the complementary device comprising a contact structure in the form of a beaded seal (71'), one longitudinal end (75b') of which is fitted with a connection pin (112') cooperating with the other longitudinal end (75b) of the first contact lip (52a) belonging to the fire resistance device (50).
